# EUROPEAN PATENT APPLICATION

(11) **EP 2 547 098 A1**
(43) Date of publication of application: **16.01.2013**
(21) Application number: 12155771.4
(22) Date of filing: 16.02.2012
(51) Int. Cl.: H04N 5/655, H04N 5/645

(54) **Television receiver and electronic device**

(30) Priority: 11.07.2011 JP 2011153209
(71) Applicant: Kabushiki Kaisha Toshiba, Tokyo 105-8001 (JP)
(72) Inventor: Ito, Shigeyuki, Tokyo, Tokyo 105-8001 (JP)
(74) Representative: Henkel, Breuer & Partner

(57) **Abstract**

According to one embodiment, a television receiver (1) includes: a display device (6); a casing (2); a substrate (10); a supporting portion (15); a first engaging portion (18); and a second engaging portion (15n). The substrate (10) is located between the display device (6) and a wall of the casing (2). The supporting portion (15) supports the substrate (10), and is fixed to the wall in a state in which the supporting portion (15) is in contact with a surface of the display device (6) or in a state in which the supporting portion (15) is capable of being in contact with the surface if the wall moves toward the display device (6) side. The first engaging portion (18) is provided to the wall. The second engaging portion (15n) is provided to the supporting portion (15), and engages with the first engaging portion (18) in a direction along the surface.

## Description

### FIELD

Embodiments described herein relate generally to a television receiver and an electronic device.

### BACKGROUND

There have been known television receivers as electronic devices each having a substrate that is fixed to the back surface of a display device inside the casing of the television receiver.

In the electronic devices of this type, when a fixing portion for fixing the substrate is provided, and if the size or the installation position of the substrate is changed, it is necessary to change the position of the fixing portion along with a change in the size or the installation position of the substrate. Therefore, it is sometimes necessary to change the specifications of the display device.

In embodiments below, there is provided, for example, a television receiver and an electronic device that are less inconvenient even when a substrate is placed on the back surface of a display device.

### SUMMARY

To overcome the problems and achieve the object mentioned above, according to one embodiment, a television receiver comprises: a display device; a casing; a substrate; a supporting portion; a first engaging portion; and a second engaging portion. The display device comprises a display screen and a surface located opposite to the display screen. The casing comprises a wall located opposite to the display screen with respect to the display device. The substrate is located between the display device and the wall. The supporting portion is configured to support the substrate, and is fixed to the wall in a state in which the supporting portion is in contact with the surface or in a state in which the supporting portion is capable of being in contact with the surface if the wall is moved toward the display device side. The first engaging portion is provided to the wall. The second engaging portion is provided to the supporting portion, and is configured to engage with the first engaging portion in a direction along the surface.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary perspective view of a front surface side of a television receiver according to an embodiment;
FIG. 2 is an exemplary perspective view of a back surface side of the television receiver in the embodiment;

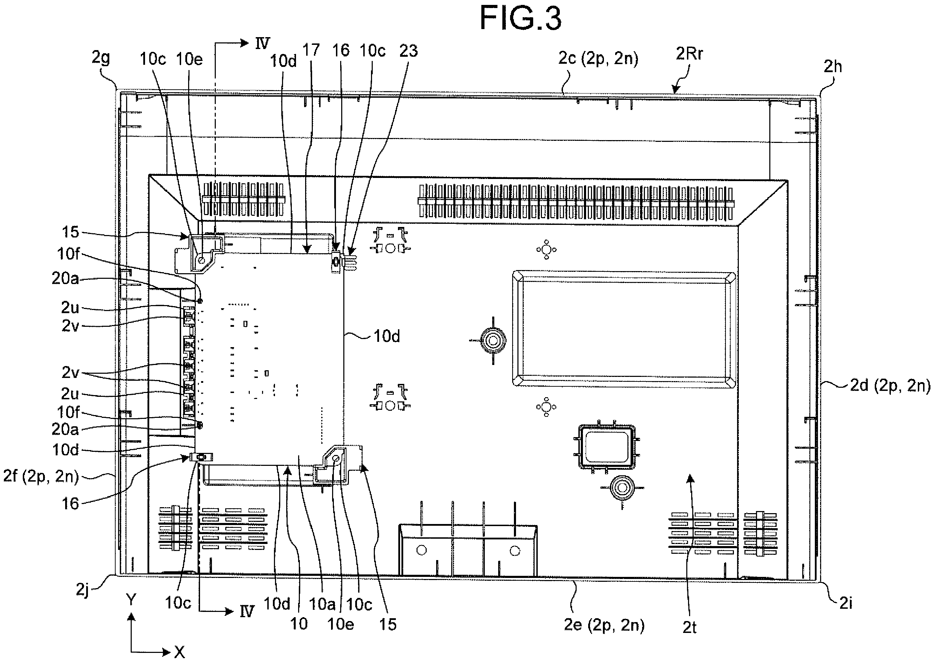

FIG. 3 is an exemplary front view of an interior of a casing of the television receiver in the embodiment;
FIG. 4 is an exemplary cross-sectional view of the television receiver taken along a line IV-IV in FIG. 3, in the embodiment;
FIG. 5 is an exemplary exploded perspective view of a substrate and supporting portions of the television receiver in the embodiment;
FIG. 6 is an exemplary perspective view of the supporting portion of the television receiver in the embodiment;
FIG. 7 is an exemplary exploded perspective view of a first member, a display device, the supporting portions, and the substrate of the television receiver in the embodiment;
FIG. 8 is an exemplary perspective view of the first member, the display device, the supporting portions, and the substrate of the television receiver in the embodiment;
FIG. 9 is an exemplary exploded perspective view of a second member, the supporting portions, and the substrate of the television receiver in the embodiment;
FIG. 10 is an exemplary perspective view of the second member, the supporting portions, and the substrate of the television receiver in the embodiment;
FIG. 11 is an exemplary exploded cross-sectional view of the second member, the supporting portions, and the substrate of the television receiver taken along the line IV-IV of FIG. 3, in the embodiment;
FIG. 12 is an exemplary perspective view of a modification of a first engaging portion and a second engaging portion of the television receiver in the embodiment;
FIG. 13 is an exemplary perspective view of another modification of the first engaging portion and the second engaging portion of the television receiver in the embodiment; and

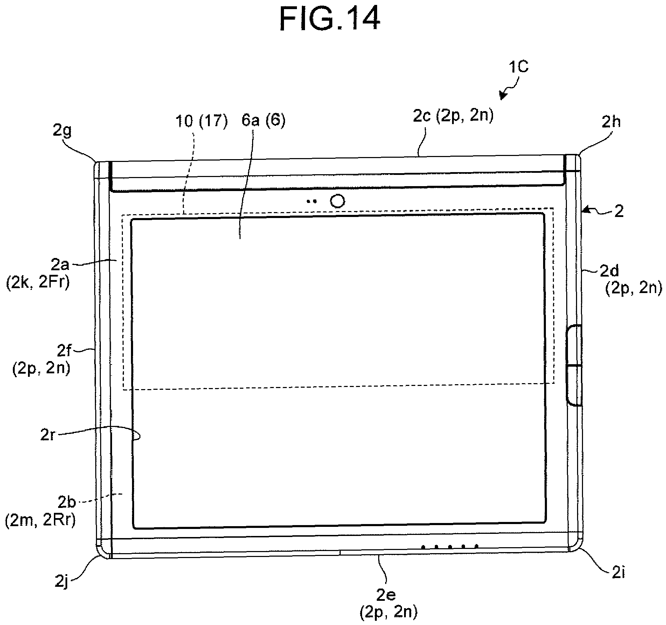

FIG. 14 is an exemplary front view of an electronic device in the embodiment.

### DETAILED DESCRIPTION

In the drawings, directions (X direction, Y direction, and Z direction) are indicated for convenience. The X direction is a long-side direction of a display screen 6a when viewed from front. The Y direction is a short-side direction of the display screen 6a when viewed from front. The Z direction is a front-back direction (a depth direction, i.e., a thickness direction of a casing 2) of the display screen 6a when viewed from front. The X direction, the Y direction, and the Z direction are perpendicular to one another.

In the following embodiments, an example will be explained in which an electronic device is configured as a television receiver. However, the electronic device in the embodiments is not limited thereto. The electronic device in the embodiments may be configured as various electronic devices, such as personal computers, smartphones, smartbooks, portable phones, personal digital assistants (PDAs), video display devices, or television phones.

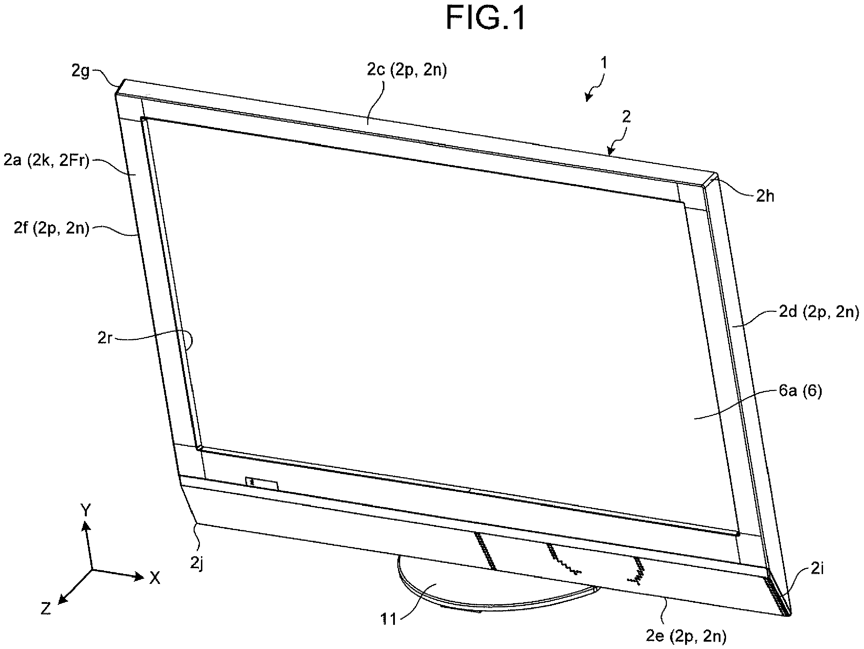

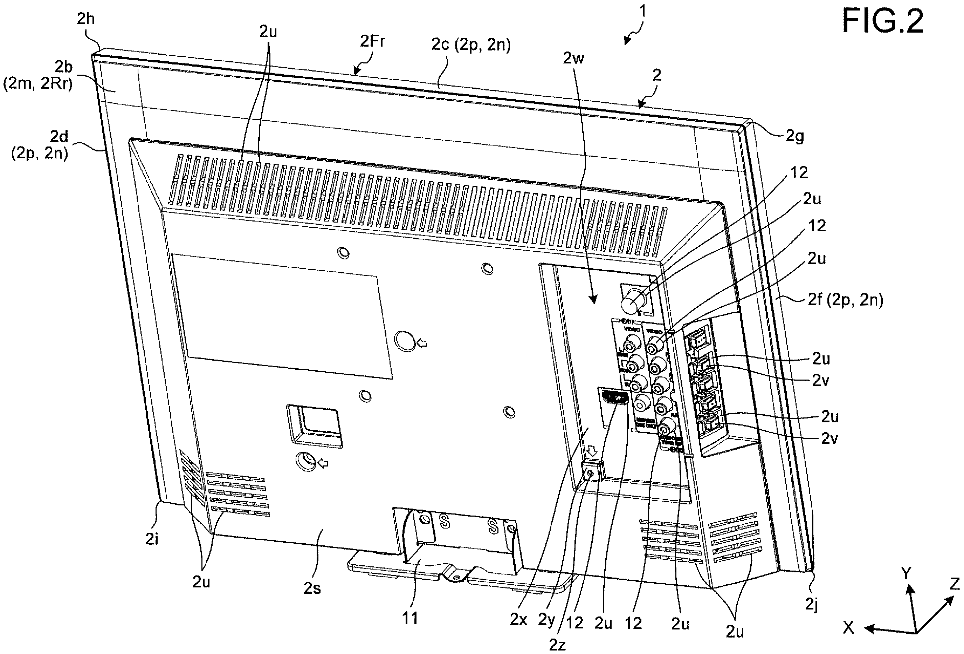

A television receiver 1 as an example of the electronic device in the embodiment comprises, as illustrated in FIGS. 1 and 2, a supporting portion (a support, a base, or a stand) 11 and the casing 2. The supporting portion 11 is placed on a placement portion (not illustrated) such as a desk, a shelf, or a rack, and supports the casing 2. The supporting portion 11 may support the casing 2 fixedly or movably (rotatably or slidably). The way to move the supporting portion 11 relative to the casing 2 may be, for example, tilt, swivel, or pivot.

As illustrated in FIGS. 1 and 2, the casing 2 is formed in a quadrilateral shape (in the embodiment, for example, in a rectangular shape) when viewed from front (and from back). The casing 2 also has a rectangular solid structure that is thin and flat in the front-back direction. The casing 2 comprises: a front surface (a front, a surface, a first surface, or a first surface member) 2a; and a back surface (a rear, a surface, a second surface, or a second surface member) 2b that is on the opposite side of the front surface 2a. The front surface 2a and the back surface 2b are approximately parallel to each other. As illustrated in FIGS. 1 and 2, the casing 2 comprises four ends (sides or edges) 2c to 2f and four corners (protrusions, curved portions, or end portions) 2g to 2j. The ends 2c and 2e are examples of long sides. The ends 2d and 2f are examples of short sides.

The casing 2 also comprises: a wall (a first wall, a first portion, a plate, a frame, an anterior wall, a front wall, or a top wall) 2k comprising the front surface 2a; and a wall (a second wall, a second portion, a plate, a posterior wall, a back wall, or a bottom wall) 2m comprising the back surface 2b. The walls 2k and 2m have quadrilateral shapes (in the embodiment, for example, rectangular shapes). The casing 2 also comprises four walls (third walls, third portions, plates, side walls, end walls, stand walls, or connecting portions) 2n comprising side surfaces (surfaces, peripheral surfaces, or third surfaces) 2p connecting the wall 2k and the wall 2m. A quadrilateral opening 2r for example is provided to the wall 2k.

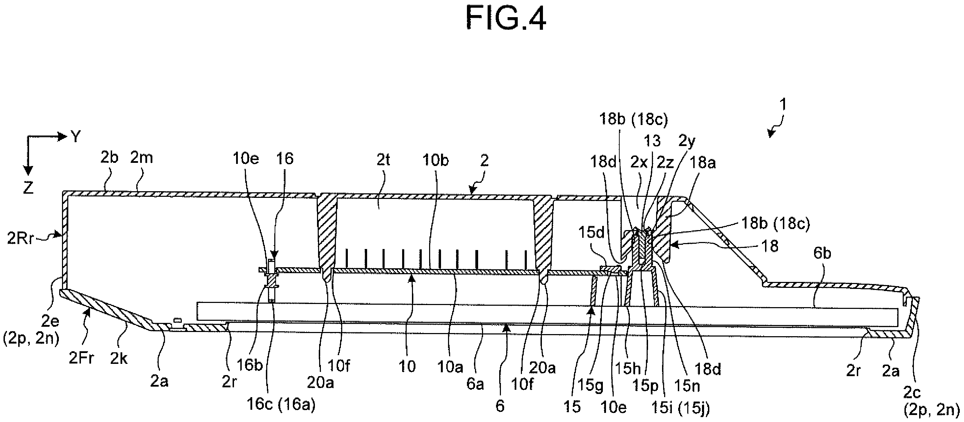

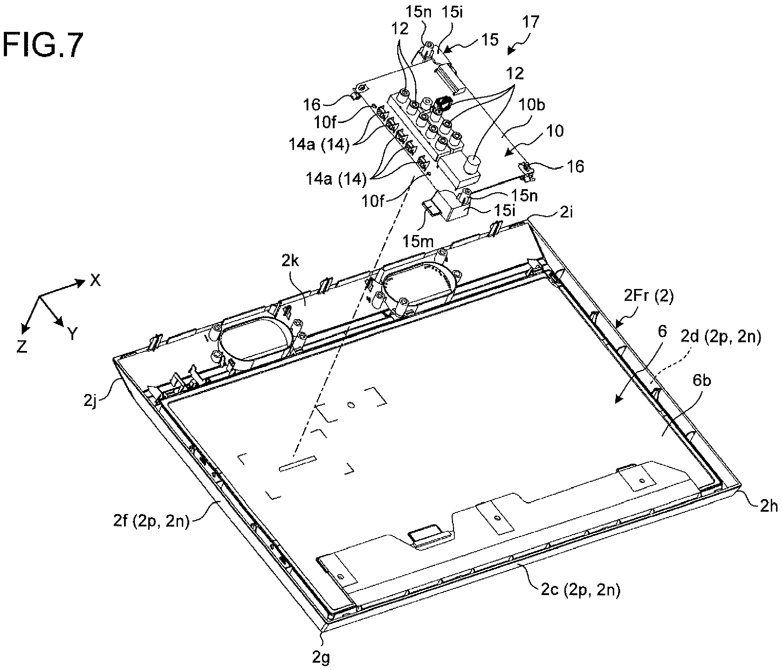

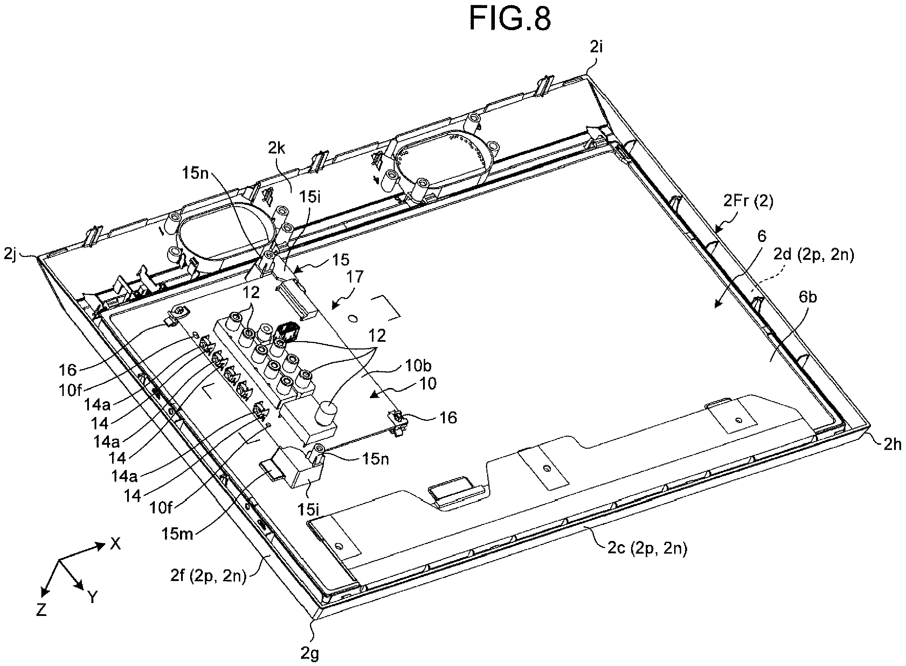

A protrusion 2s protruding backward, for example, may be provided to the wall 2m. A concave 2t (see FIG. 4) is formed on the back side of the protrusion 2s (i.e., the inner side of the casing 2). A plurality of openings 2u, for example, are arranged on the wall 2m. A connector (a connecting portion, a terminal portion, a terminal, or a link portion) 12 as a component for example is exposed from at least a portion of the openings 2u. The connector 12 is provided to a substrate 10 (see, for example, FIGS. 7 and 8). A cover portion (a cover or a manipulandum) 2v that is elastically retractable (movable or protrusible) for example is provided to at least a portion of the openings 2u. The cover member 2v covers a movable member 14a (see FIGS. 7 and 8) of a switch 14 that is a component arranged on the substrate 10. The cover member 2v may be configured as, for example, a cantilever protruding from the edge of the opening 2u to the inside of the opening. At least a portion of the openings 2u functions as, for example, a vent. In the embodiment, for example, a concave 2w that is concave toward the front side is formed on a portion where the opening 2u with the exposed connector 12 is arranged. The concave 2w is formed in a quadrilateral shape when viewed from back. The openings 2u are arranged on a flat bottom portion 2x of the concave 2w.

The casing 2 may be configured as an assembly of a plurality of components (divided bodies or members). As illustrated in FIG. 4, for example, the casing 2 comprises: a first member (a first portion, a front-side member, or a cover) 2Fr comprising at least the wall 2k; and a second member (a second portion, a back-side member, a base, or a bottom) 2Rr comprising at least the wall 2m. Walls 2n can be comprised in at least one of the first member 2Fr and the second member 2Rr (for example, involved in the second member 2Rr).

As illustrated in FIG. 4, a display device (a display module, a display, or a panel) 6 is housed in the casing 2. The display screen 6a located on the front surface 2a side of the display device 6 is exposed to the front side (exterior side) of the casing 2 via the opening 2r, so that a user can view the display screen 6a via the opening 2r from the front side. The display device 6 is formed in the quadrilateral shape (in the embodiment, for example, in the rectangular shape) when viewed from front. The display device 6 also has a rectangular solid structure that is thin and flat in the front-back direction. The display device 6 may be, for example, a liquid crystal display (LCD) or an organic electro-luminescent display (OELD).

The substrate (a control substrate, a main substrate, or a circuit substrate) 10 is housed in the back side of the display device 6 (a posterior side, a rear side, the wall 2m side, or the opposite side of the display screen 6a). The substrate 10 is provided in parallel to a surface (back surface) 6b of the display device 6. The substrate 10 is provided so as to be spaced apart from the walls 2k, 2m, 2n, and the like, that is, so that a space is formed between the substrate 10 and the walls 2k, 2m, 2n, and the like. The substrate 10 is fixed to the casing 2 with a joint 13, such as a screw (see FIG. 4). In the embodiment, for example, a first supporting portion (a first support member, a supporting portion, or a support member) 15 and a second supporting portion (a second support member, a supporting portion, or a support member) 16 are attached to the substrate 10. The first supporting portion 15 is fixed to the casing 2 with the joint 13. That is, the substrate 10 is fixed to the casing 2 via the joint 13 and the first supporting portion 15. The substrate 10 is also supported by the first supporting portion 15 and the second supporting portion 16 such that a clearance is maintained with respect to the surface 6b of the display device 6. The first supporting portion 15 and the second supporting portion 16 are in contact with the surface 6b of the display device 6 in the assembly state, i.e., in a state in which the first supporting portion 15, the substrate 10, and the second supporting portion 16 are attached to the casing 2 via the joint 13, or in a state in which the first supporting portion 15, the substrate 10, and the second supporting portion 16 are made capable of being in contact with the surface 6b when the wall 2m is moved toward the display device 6 side. In the embodiment, the first supporting portion 15 is an example of a supporting portion. The second supporting portion 16 is an example of a protrusion.

A plurality of components (electronic components or elements, which are not illustrated), such as a central processing unit (CPU), are mounted on the substrate 10 in addition to the connectors 12. The electronic components comprise a heating element. A cooler mechanism (a radiator or a heat receiver, which is not illustrated) can be provided to an electronic component (a heating element) that generates a large amount of heat. At least a portion of a control circuit (not illustrated) is constructed of the substrate 10 and the electronic components. The control circuit may comprise, for example, a video signal processor circuit, a tuner, a high-definition multimedia interface (HDMI) signal processor, an audio video (AV) input terminal, a remote controller signal receiver, a controller, a selector, an on-screen display interface, a storage (e.g., a read only memory (ROM), a random access memory (RAM), or a hard disk drive (HDD)), or au audio signal processor circuit. The control circuit controls output of video (moving pictures or still pictures) on the display screen 6a of the display device 6, output of audio via a speaker (not illustrated), or light emission of a light emitting diode (LED) (not illustrated). The display device 6, the speaker, and the LED are examples of an output module.

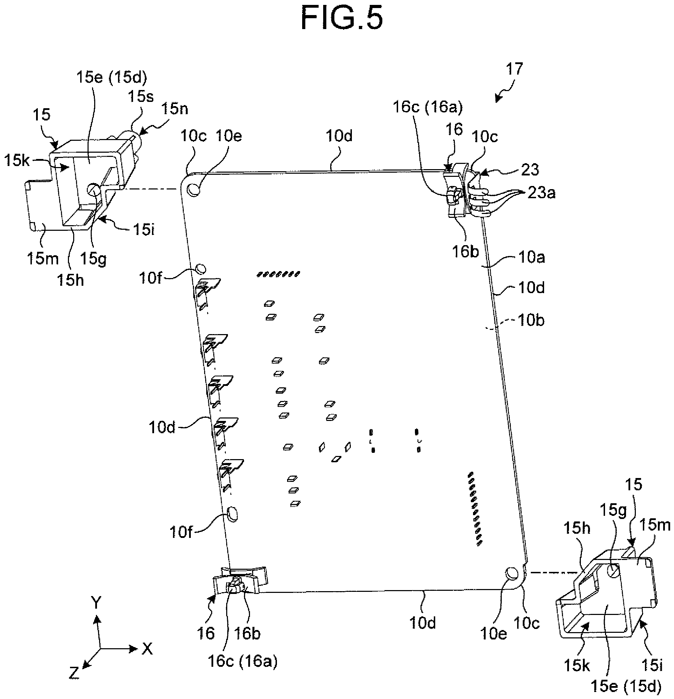

An assembling method of the television receiver 1 as the electronic device in the embodiment will be explained below with reference to FIGS. 5 to 11.

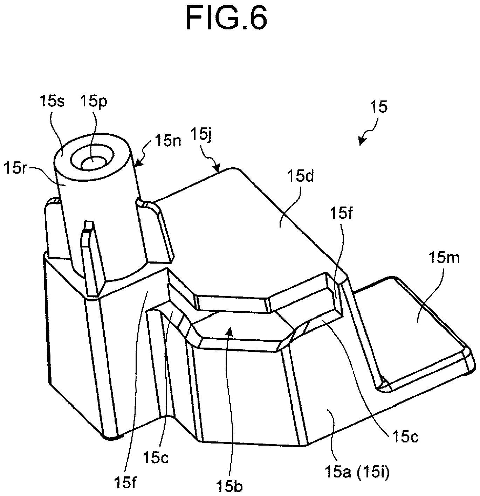

As illustrated in FIG. 5, in the embodiment, a substrate assembly (a sub assembly or a substrate structure) 17 comprises the substrate 10, the first supporting portions 15, the second supporting portions 16, and a conductive component 23. In the embodiment, for example, the first supporting portions 15 are attached to two diagonally arranged corners 10c among the four corners 10c of the quadrilateral substrate 10, and the second supporting portions 16 are mounted on other two diagonally arranged corners 10c. The conductive component 23 is mounted on the substrate 10 together with the second supporting portion 16 such that the conductive component 23 is sandwiched between a portion (a protrusion 16b) of the second supporting portion 16 and the substrate 10. The corners 10c of the substrate 10 are inserted into openings 15b (see FIG. 6) arranged on side surfaces 15a of the first supporting portions 15. When the corners 10c are fully inserted into the openings 15b, a surface 10a of the substrate 10 is supported by edges (bottom edges) 15c of the openings 15b and a surface 10b of the substrate 10 is supported by surfaces 15e of walls 15d of the first supporting portions 15. Furthermore, ends (sides or edges) 10d of the substrate 10 are supported by edges (side edges) 15f of the openings 15b. Projections (protrusions) 15g protruding in a direction crossing the surfaces 10a and 10b of the substrate 10 (e.g., in a perpendicular direction) are arranged on the surfaces 15e of the walls 15d. The projections 15g are to be inserted into openings (concaves) 10e arranged on the corners 10c of the substrate 10 when the substrate 10 and the first supporting portions 15 are assembled. Here, a clearance (not illustrated), for example, is provided between the projections 15g and the openings 10e in the direction along the surfaces 10a and 10b of the substrate 10. Therefore, the substrate 10 and the first supporting portions 15 can move relatively with respect to each other within the clearance in the direction along the surfaces 10a and 10b of the substrate 10 when the substrate and the first supporting portions are assembled. That is, the projections 15g and the openings 10e (or the edges) are examples of engaging portions (positioning portions) which engages the substrate 10 with the first supporting portions 15 in the direction along the surfaces 10a and 10b of the substrate 10 while allowance for certain displacement of the substrate 10 and the first supporting portions 15 is maintained. In the embodiment, the openings 10e are formed as through holes for example. However, the openings 10e can at least be engaged with at least a portion of the first supporting portions 15. In this regard, for example, the openings may be formed as notches or holes with bottoms (concaves with bottoms). It is also possible to provide the projections (protrusions) on the substrate 10 and provide the openings (concaves) on the first supporting portions 15.

In the embodiment, each of the first supporting portions 15 has the following structure, for example. That is, as illustrated in FIGS. 5 and 6, the first supporting portion 15 comprises: a surface 15h that comes into contact with the surface 6b of the display device 6; and a wall (a peripheral wall or a side wall) 15i protruding in a direction crossing the surface 15h (the surfaces 10a, 10b, and 6b). On the first supporting portion 15, a protrusion 15j is formed by the wall 15i and the wall 15d, and a concave (a space) 15k is formed by being surrounded by the wall 15i and the wall 15d (a top wall or an upper wall). The opening 15b is provided to the wall 15i. The first supporting portion 15 comprises a wall 15m extending from the protrusion 15j in a direction along the surface 15h (the surfaces 10a, 10b, and 6b). The wall 15m constitutes a portion of the surface 15h. That is, the surface 15h in the embodiment is larger than a surface that does not have the wall 15m by the amount corresponding to the wall 15m. The surface 15h can be used as a site where a buffer member (a buffer, a cushion member, or a cushion, which is not illustrated) is interposed with respect to the surface 6b of the display device 6. For example, the buffer member can be attached to the surface 6b. The first supporting portion 15 comprises a protrusion 15n. The protrusion 15n extends in a direction crossing the surface 15h (the surfaces 10a, 10b, and 6b). A female screw hole 15p is provided to the protrusion 15n. The joint 13, such as a screw, is fixed to the female screw hole 15p. That is, the protrusion 15n is an example of a fixing portion for fixing the joint 13. The first supporting portion 15 is made of, for example, synthetic resin material.

In the embodiment, each of the second supporting portions 16 comprises, for example, a stick portion 16a and a flange portion 16b. The flange portion 16b protrudes in a direction (e.g., a perpendicular direction) crossing the direction along which the stick portion 16a extends, from the middle of the stick portion 16a in the longitudinal direction. In the embodiment, one end of the stick portion 16a in the longitudinal direction is inserted into the opening 10e of the substrate 10 from the surface 10a side, and the flange portion 16b and other end 16c of the stick portion 16a are protruded on the surface 10a. The other end 16c is an example of a contact portion that comes into contact with the surface 6b of the display device 6. The second supporting portion 16 is made of, for example, synthetic resin material. The conductive component 23 is made of, for example, conductive material, such as metal material, and comprises a plurality of terminals 23a that come into contact with the surface 6b of the display device 6. The ground of the display device 6 and the ground of the substrate 10 are connected to each other via the conductive component 23. The terminals 23a have specifications that allow the terminals to be easily bent.

In the embodiment, as illustrated in FIGS. 7 and 8, the substrate assembly 17 comprising the substrate 10, the first supporting portions 15, the second supporting portions 16, and the conductive component 23 is mounted on the surface 6b of the display device 6. As illustrated in FIG. 7, in the embodiment, portions for fixing the substrate 10, the first supporting portions 15, and the second supporting portions 16 of the substrate assembly 17 are not provided on the surface 6b of the display device 6. Therefore, for example, even when the specification (the size or the form) of the substrate 10 or the mounting position of the substrate 10 is changed, or even when a different substrate (not illustrated) is associated with the display device 6, it is possible to suppress a change in the specifications of the display device 6, and more preferably, it is possible to eliminate the change in the specifications of the display device 6. In other words, it is possible to increase the design flexibility of the substrate 10 or the substrate assembly 17 with respect to the display device 6 that has specific specifications. Furthermore, in the embodiment, as illustrated in FIGS. 7 and 8, after the substrate assembly 17 is mounted on the surface 6b of the display device 6, the substrate 10 and the display device 6 can be electrically connected to each other with a cable (e.g., a flexible printed wiring board or a flexible flat cable, which is not illustrated). In the state in FIG. 7, for example, the display device 6 can be fixed to the first member 2Fr. Alternatively, the position of the display device 6 is set on the first member 2Fr in the state in FIG. 7, and thereafter the display device 6 is fixed to the first member 2Fr in the subsequent process.

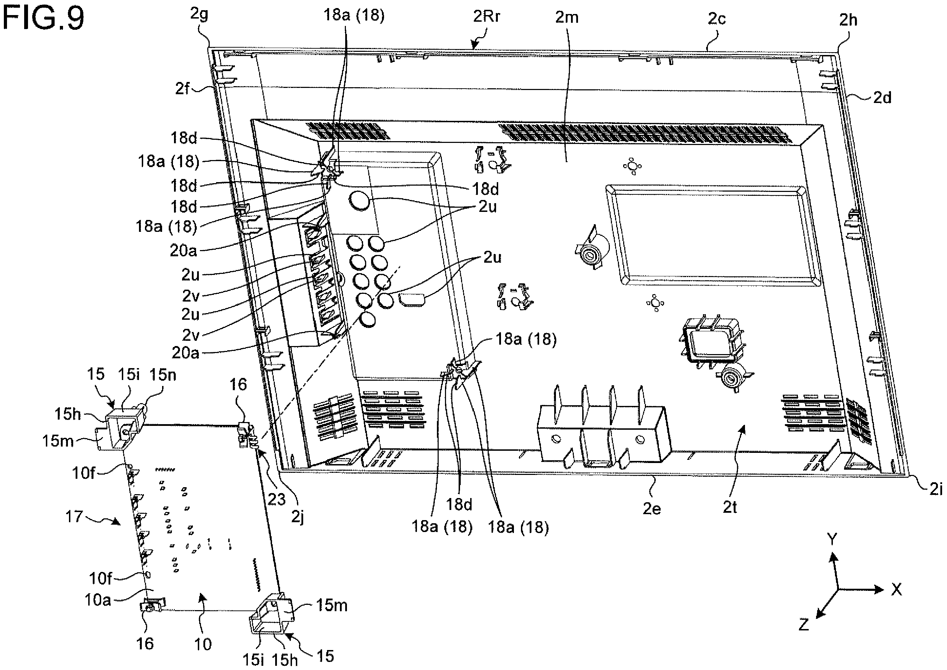

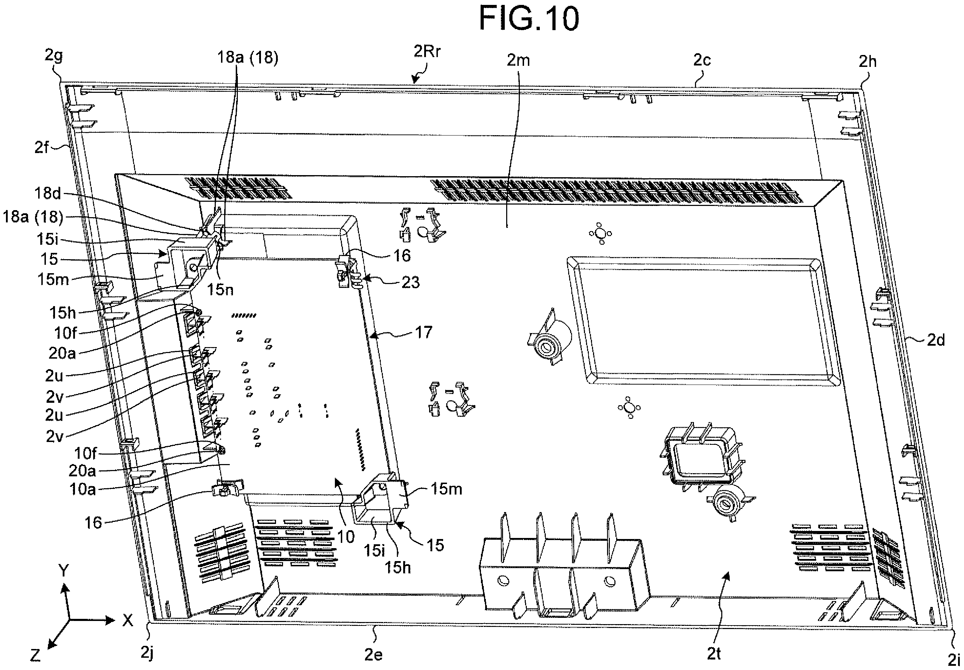

As illustrated in FIGS. 9 to 11, in the embodiment, the second member 2Rr of the casing 2 is mounted on the sub assembly illustrated in FIG. 8. In FIGS. 9 and 10, only the substrate assembly 17 and the second member 2Rr are illustrated for convenience. However, in the state illustrated in FIGS. 9 and 10, the substrate assembly 17 is mounted on the surface 6b of the display device 6 as illustrated in FIG. 8.

As illustrated in FIGS. 9 to 11 and 4, in the embodiment, for example, protrusions 18 corresponding to the protrusions 15n of the first supporting portions 15 are provided to the second member 2Rr. In the embodiment, for example, each of the protrusions 18 comprises a plurality of plate-like portions 18a (in the embodiment, four plate-like portions). The plate-like portions 18a extend along a direction crossing the surface 6b (e.g., in a perpendicular direction). In the embodiment, the four plate-like portions 18a are arranged in a cross form when viewed from front (or from back). In the embodiment, for example, ends (edges or sides) 18b of the four plate-like portions 18a adjacent (opposite) to the other plate-like portions 18a form a receiving portion (an opening, a concave, or an insertion portion) 18c as a portion (a region, a space, or a position) where the protrusion 15n is inserted (received). When the second member 2Rr is brought close to the sub assembly illustrated in FIG. 8 and the state is changed form the state in FIG. 9 to the state in FIG. 10, the protrusion 15n is inserted into the receiving portion 18c as illustrated in FIG. 4, and the protrusion 15n (or a side surface (a peripheral surface) 15r) and the plate-like portion 18a are engaged with each other in a direction along the surface 6b. Furthermore, an end 15s of the protrusion 15n and a wall 2y as a part of the wall 2m of the second member 2Rr are engaged with each other. An opening (e.g., a through hole) 2z is arranged on the wall 2y. By inserting the joint (e.g., a screw) 13 through the opening 2z from the back side of the wall 2m and engaging the joint with the female screw hole 15p of the protrusion 15n, the first supporting portion 15 and the substrate assembly 17 (the substrate 10) are fixed to each other with the joint 13. In the embodiment, the plate-like portions 18a (or the ends 18b) are examples of first engaging portions (positioning members) and the protrusions 15n are examples of second engaging portions (positioning members).

In the embodiment, inclined portions 18d are provided to the protrusions 18. The inclined portions 18d guide the protrusions 15n toward the receiving portions 18c when the second member 2Rr is brought close to the sub assembly illustrated in FIG. 8 and the state is changed from the state in FIG. 9 to the state in FIG. 10. The inclined portions 18d are examples of guide members. Each of the inclined portions 18d is inclined in a direction away from the center position of the receiving portion 18c in the direction along the surface 6b, as the inclined portion 18d is brought away the wall 2m from the open end portion of the receiving portion 18c (i.e., is brought close to the surface 6b). Therefore, if the protrusion 15n and the receiving portion 18c are displaced in the direction along the surface 6b, the protrusion 15n approaching the receiving portion 18c along the direction crossing the surface 6b comes into contact with the inclined portions 18d and moves in a direction toward the receiving portion 18c along the inclined portions 18d. The guide members can be provided to the protrusions 15n (the first supporting portions 15). For example, the guide members can be provided as tapered inclined surfaces on the tips of the protrusions 15n. It is also possible to provide the guide members on both of the second member 2Rr and the first supporting portions 15.

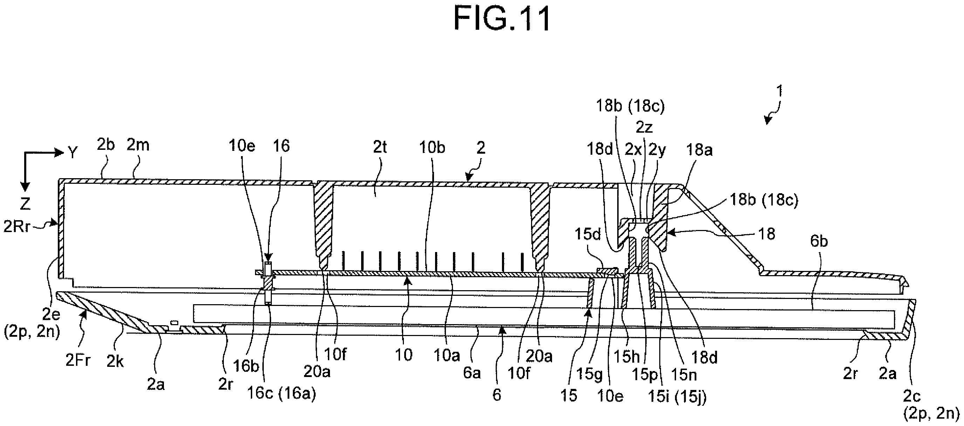

In the embodiment, for example, protrusions 20a provided to the wall 2m of the second member 2Rr are engaged with openings 10f provided to the substrate 10, in the direction along the surface 6b (the surfaces 10a and 10b). In the embodiment, with the configuration in which the wall 2m and the substrate 10 are engaged with each other, it becomes possible to, for example, easily align the positions of the wall 2m and the substrate 10 with high accuracy. In this case, it is preferable that a clearance between the protrusions 20a and the openings 10f (i.e., the misalignment allowance between the casing 2 and the substrate 10 in the direction along the surface 6b) is smaller than a clearance between the protrusions 15n and the ends 18b of the plate-like portions 18a (i.e., the misalignment allowance between the casing 2 and the first supporting portions 15 in the direction along the surface 6b). Furthermore, in the embodiment, as illustrated in FIG. 11 for example, the tips of the protrusions 20a and the openings 10f are located at the opposite positions when the second member 2Rr and the sub assembly illustrated in FIG. 8 are brought close to each other and the tips of the protrusions 15n and the tips on the inlet sides of the receiving portions 18c are engaged with each other. Therefore, in the embodiment, for example, the protrusions 20a and the openings 10f can be more smoothly engaged with each other, so that it becomes possible to more smoothly assemble the television receiver 1. In the embodiment, the protrusions 20a are examples of third engaging portions, and the openings 10f are examples of fourth engaging portions. In the embodiment, the openings 10f are formed as through holes by way of example. However, it is sufficient that the openings 10f are engaged with at least a portion of the casing 2. Therefore, for example, the openings can be formed as notches or holes with bottoms (concaves with bottoms). It is also possible to arrange the projections (the protrusions) on the substrate 10 and arrange the openings (the concaves) on the casing 2.

Furthermore, in the embodiment, for example, the openings 10f as examples of the fourth engaging portions are located closer to the switches 14 that are components provided to the substrate 10 than the protrusions 15n that are examples of the second engaging portions. Therefore, in the embodiment, for example, it is possible to further increase the positional accuracy between the components arranged on the substrate 10 and the wall 2m (e.g., the positional accuracy in the direction along the surface 6b). Moreover, in the embodiment, for example, the two openings 10f that are examples of the fourth engaging portions are arranged so as to sandwich the switches 14 that are components arranged on the substrate 10. Therefore, in the embodiment, it is possible to, for example, more increase the positional accuracy between the components arranged on the substrate 10 and the wall 2m. More specifically, with the above configuration, it is possible to, for example, further increase the positional accuracy between the cover members 2v arranged on the wall 2m and the switches 14 as the components or the positional accuracy between the openings 10f arranged on the wall 2m and the connectors 12 that are components exposed from the openings 10f.

As described above, in the embodiment, the television receiver 1 as the electronic device comprises, for example: the first supporting portions 15 supporting the substrate 10, and fixed to the wall 2m in a state in which the first supporting portions 15 are in contact with the surface 6b or in a state in which the first supporting portions 15 are made capable of being in contact with the surface 6b when the wall 2m is moved toward the display device 6 side; the plate-like portions 18a (the ends 18b) as the first engaging portions arranged on the wall 2m; and the protrusions 15n as the second engaging portions provided to the first supporting portions 15 and engaged with the plate-like portions 18a (the ends 18b) in the direction along the surface 6b. Therefore, in the embodiment, for example, it is not necessary to fix the substrate 10 to the display device 6, thereby the display device 6 can be constructed at lower costs. Furthermore, for example, it is possible to increase the versatility of the display device 6. Moreover, for example, it is possible to increase the flexibility of the specifications or the position of the substrate 10.

Furthermore, the television receiver 1 in the embodiment further comprises the inclined portions 18d as the guide members that guide at least one of the plate-like portions 18a (the ends 18b) as the first engaging portions and the protrusions 15n as the second engaging portions (in the embodiment, the protrusions 15n) toward one of the wall 2m and the first supporting portions 15 (in the embodiment, toward the wall 2m) so that the plate-like portions 18a and the protrusions 15n are located at positions where the plate-like portions and the protrusions are engaged with each other. Therefore, in the embodiment, for example, it is possible to more smoothly perform the assembly operation of the television receiver 1.

Moreover, in the television receiver 1 of the embodiment, each of the protrusions 15n as the second engaging portions functions as a fixing portion for fixing a screw that is the joint 13. Therefore, in the embodiment, for example, the configuration can be more simplified than a configuration in which the second engaging portion and the fixing portion are separate from each other.

Furthermore, in the television receiver 1 of the embodiment, for example, each of the first engaging portions comprises the plate-like portions 18a. Therefore, in the embodiment, for example, the first engaging portions can easily be elastically deformed, so that it becomes possible to, for example, absorb the shock between the first engaging portions and the second engaging portions.

Moreover, in the television receiver 1 of the embodiment, for example, at least two of the first supporting portions 15 support the corners 10c that are arranged diagonally opposite to each other on the substrate 10. Therefore, in the embodiment, for example, it is possible to more stably support the substrate 10.

Furthermore, the television receiver 1 of the embodiment comprises: the second supporting portions 16 as the protrusions protruding toward the surface 6b without coming into contact with the casing 2, and provided to the substrate 10 in a state in which the second supporting portions 16 are in contact with the surface 6b or in a state in which the second supporting portions 16 are made capable of being in contact with the surface 6b when the wall 2m is moved toward the display device 6 side. Therefore, in the embodiment, for example, it is possible to more stably support the substrate 10.

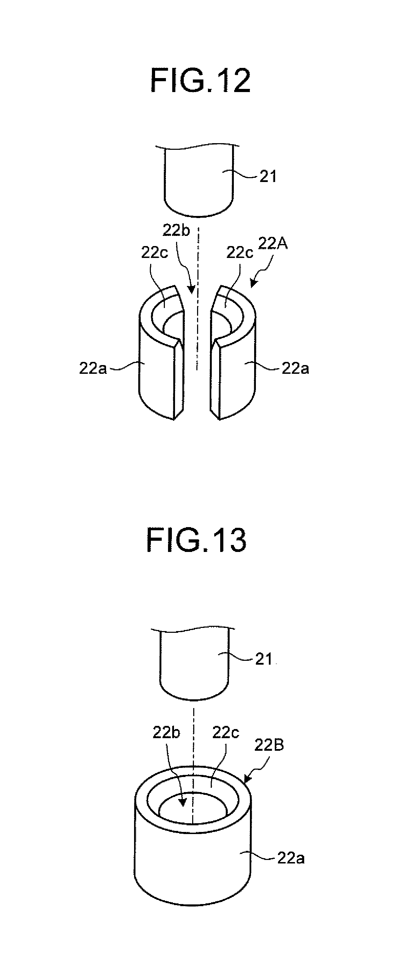

FIGS. 12 and 13 are perspective views illustrating modifications of engaging portions 21, 22A, and 22B. The engaging portion 21 can be used as a replacement for one of the protrusions 15n of the first supporting portions 15 and the protrusions 18 in the embodiment, and the engaging portions 22A and 22B can be used as replacements for the other one of the protrusions 15n and the protrusions 18. The engaging portion 22A illustrated in FIG. 12 comprises a plurality of (in the example, two) protrusions 22a. A receiving portion 22b for receiving the engaging portion 21 is provided between the protrusions 22a. Inclined portions (inclined surfaces) 22c as guide members are provided to the engaging portions 22A. Even in this example, the protrusions 22a can suppress movement of the engaging portion 21 in the direction along the surface 6b. That is, the positions of the first supporting portions 15 and the wall 2m in the direction along the surface 6b can be determined by the engaging portion 21 and the engaging portion 22A. The engaging portion 22B illustrated in FIG. 13 comprises one cylindrical protrusion 22a. The receiving portion 22b for receiving the engaging portion 21 is provided in the cylinder. The inclined portion (the inclined surface) 22c as a guide member is provided to the engaging portion 22B. Even in this example, the protrusion 22a can prevent movement of the engaging portion 21 in the direction along the surface 6b. That is, the positions of the first supporting portions 15 and the wall 2m in the direction along the surface 6b can be determined by the engaging portion 21 and the engaging portion 22B.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A television receiver (1) comprising:
a display device (6) comprising a display screen (6a) and a surface (6b) located opposite to the display screen (6a);
a casing (2) comprising a wall (2m) located opposite to the display screen (6a) with respect to the display device (6);
a substrate (10) located between the display device (6) and the wall (2m);
a supporting portion (15) configured to support the substrate (10), and fixed to the wall (2m) in a state in which the supporting portion (15) is in contact with the surface (6b) or in a state in which the supporting portion (15) is capable of being in contact with the surface (6b) if the wall (2m) is moved toward the display device (6) side;
a first engaging portion (18, 21, 22A, 22B) provided to the wall (2m); and
a second engaging portion (15n, 22A, 22B, 21) provided to the supporting portion (15), and configured to engage with the first engaging portion (18, 21, 22A, 22B) in a direction along the surface (6b).

2. The television receiver (1) of Claim 1, further comprising a guide portion (18d, 22c) provided to at least one of the wall (2m) and the supporting portion (15), and configured to guide at least one of the first engaging portion (18, 21, 22A, 22B) and the second engaging portion (15n, 22A, 22B, 21) to a position where the at least one of the first engaging portion (18, 21, 22A, 22B) and the second engaging portion (15n, 22A, 22B, 21) is engaged with other one of the first engaging portion (18, 21, 22A, 22B) and the second engaging portion (15n, 22A, 22B, 21).

3. The television receiver (1) of Claim 1 or 2, wherein the supporting portion (15) is configured to support the substrate (10) such that the substrate (10) can move in the direction along the surface (6b).

4. The television receiver (1) of any one of Claims 1 to 3, further comprising:
a joint (13) configured to engage the wall (2m) with the supporting portion (15);
a protrusion (15n) provided to the supporting portion (15) ;
a fixing portion (15p) provided to the protrusion (15n) and configured to fix the joint (13) thereto, wherein
the second engaging portion (15n, 21, 22A, 22B) is provided to at least a portion of the protrusion (15n).

5. The television receiver (1) of any one of Claims 1 to 4, wherein one of the first engaging portion (18, 21, 22A, 22B) and the second engaging portion (15n, 22A, 22B, 21) comprises a plate-like portion (18a) configured to engage the one of the first engaging portion (18, 21, 22A, 22B) and the second engaging portion (15n, 22A, 22B, 21) with other one of the first engaging portion (18, 21, 22A, 22B) and the second engaging portion (15n, 22A, 22B, 21).

6. The television receiver (1) of any one of Claims 1 to 5, further comprising:
a third engaging portion (20a) provided to the wall (2m);
and
a fourth engaging portion (10f) provided to the substrate (10), and configured to engage with the third engaging portion (20a) in the direction along the surface (6b).

7. The television receiver (1) of Claim 6, further comprising:
a component (12, 14) provided to the substrate (10), wherein
the fourth engaging portion (10f) is located closer to the component (12, 14) than the second engaging portion (15n, 22A, 22B, 21).

8. The television receiver (1) of Claim 6, further comprising:
a component (12, 14) arranged on the substrate (10), wherein
the fourth engaging portion (10f) comprises two fourth engaging portion (10f), and
the fourth engaging portions (10f) are provided so as to sandwich the component (12, 14) therebetween.

9. The television receiver (1) of any one of Claims 1 to 8, wherein
the supporting portion (15) comprises at least two supporting portions (15), and
the at least two supporting portions (15) are provided so as to support two corners (10c) of the substrate (10) diagonally arranged with respect to each other.

10. The television receiver (1) of any one of Claims 1 to 9, further comprising a protrusion (16) protruding toward the surface (6b) without coming into contact with the casing (2), and provided to the substrate (10) in a state in which the protrusion (16) is in contact with the surface (6b) or in a state in which the protrusion (16) is capable of being in contact with the surface (6b) if the wall (2m) is moved toward the display device (6) side.
